# EUROPÄISCHE PATENTANMELDUNG

(11) **EP 3 919 194 A1**
(43) Veröffentlichungstag der Anmeldung: **08.12.2021**
(21) Anmeldenummer: 21172202.0
(22) Anmeldetag: 05.05.2021
(51) Int. Cl.: B08B 7/02, B22F 10/68, B29C 64/35, B33Y 40/20, B33Y 50/02, B22F 10/85, B22F 10/66, B22F 10/73

(54) **VERFAHREN ZUM TRENNEN VON UNVERFESTIGT VERBLIEBENEM AUFBAUMATERIAL VON WENIGSTENS EINEM IM 3D-DRUCKVERFAHREN ENTSTANDENEN OBJEKT**

(30) Priorität: 03.06.2020 DE 102020003334; 31.03.2021 EP 21166140
(71) Anmelder: Solukon Ingenieure GbR, 86165 Augsburg (DE)
(72) Erfinder: Hartmann, Andreas, 86391 Stadtbergen (DE)
(74) Vertreter: Wiedemann, Markus

(57) **Zusammenfassung**

Ein Verfahren zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts (3), wobei das Verfahren einen Schritt (500) einer Anregung des realen Objekts (3) zu Schwingungen durch einen von einer elektronische Steuerung (16) gesteuerten Schwingungserreger (11, 12) mit einer Erregerfrequenz (fₑ) und/oder mit einer Erregeramplitude (Aₑ) umfasst, um im Rahmen einer Reinigungsphase unverfestigt verbliebenes Aufbaumaterial von dem realen Objekt (3) zu trennen. Dabei wird in einer Testphase das Objekt und/oder ein computergeneriertes Modell des Objekts mit einer Bandbreite (fₑ₁; fₑ₂) von Erregerfrequenzen fe und/oder mit einer Bandbreite (Aₑ₁; Aₑ₂) von Erregeramplituden (Aₑ) erregt und untersucht, für welche Erregerfrequenz(en) (fₑ) und/oder für welche Erregeramplitude(n) (Aₑ) die sich jeweils ergebende Schwingungsamplitude (A) größer als die Grenz-Schwingungsamplitude (A_{grenz}) ist. In der Reinigungsphase wird eine Anregung des Objekts oder des weiteren Objekts mit einer Erregerfrequenz fₑ und/oder mit einer Erregeramplitude (Aₑ) oder mit Erregerfrequenzen (fₑ) und/oder mit Erregeramplituden (Aₑ) vermieden, bei der oder bei denen sich herausgestellt hat, dass sie zu übermäßigen, die Grenz-Schwingungsamplitude (A_{grenz}) übersteigenden Schwingungsamplituden (A) an dem Objekt und/oder an dem computergenerierten Modell des Objekts geführt haben.

## Beschreibung

Die vorliegende Erfindung betrifft ein Verfahren zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts, gemäß dem Oberbegriff von Anspruch 1.

Ein gattungsgemäßes Verfahren ist aus WO 2015/071184 A1 bekannt. Dort wird zunächst eine Lasersinter- oder Laserschmelzvorrichtung als Bauvorrichtung beschrieben. Zum Aufbauen des Objekts enthält sie eine Baukammer, in der ein nach oben offener Wechselbehälter angeordnet ist, was bedeutet, dass er der Prozesskammer entnommen und wieder in sie eingesetzt werden kann. In dem Wechselbehälter ist ein in einer vertikalen Richtung bewegbarer Träger angeordnet, an dem eine Grundplatte angebracht ist, die den Wechselbehälter nach unten abschließt und damit dessen Boden bildet. Auf der Grundplatte ist eine Bauplattform angebracht sein, auf der das Objekt durch schichtweises Aufbringen und selektives Verfestigen eines pulverförmigen Aufbaumaterials aufgebaut wird. Zusätzlich zur Bauvorrichtung wird eine als Drehvorrichtung ausgebildete Auspackvorrichtung beschrieben. An einer Drehvorrichtung wird der Wechselbehälter nach dem Abschluss des Bauprozesses angebracht und dann der Wechselbehälter um einen Winkel von mindestens 90° aus der aufrechten Position herausgedreht, damit unverfestigt gebliebenes Pulver aus dem Wechselbehälter herausrieseln kann. Zusätzlich ist vorgesehen, dass Vibrationen von außen auf den Wechselbehälter aufgebracht werden, um ein Ablösen von Pulver von dem Objekt zu unterstützen.

Die Aufgabe der Erfindung darin, das Verfahren derart weiterzubilden, dass Beschädigungen am Objekt vermieden und die Umwelt weniger belastet wird.

Diese Aufgabe wird erfindungsgemäß durch die Merkmale von Anspruch 1 gelöst.

### Offenbarung der Erfindung

Das Herstellen des wenigstens einen dreidimensionalen Objekts, wie beispielsweise eines Bauteils oder Modells, welches dann mit dem erfindungsgemäßen Verfahren von unverfestigt verbliebenem Aufbaumaterial getrennt wird, erfolgt in einem Schichtbauverfahren mit Hilfe von Computerdaten, indem wiederholt dünne Schichten aus losem pulverförmigen Aufbaumaterial auf eine Bauplattform und/oder in einem Baubehälter aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher (Laser-)Strahlung zu verschmelzen oder zu versintern.

Unter einem Objekt soll daher im Sinne der Erfindung ein zusammen mit der Bauplattform hergestelltes Werkstück oder Bauteil verstanden werden, oder auch das Werkstück oder Bauteil alleine ohne eine Bauplattform sowie auch ein Objekt. Welches in einem Baubehälter generativ erzeugt worden ist. Der Begriff "Objekt" alleine meint stets das Objekt selbst, ohne an ihm noch anhaftendes, unverfestigt verbliebenes Aufbaumaterial.

Nach dem additiven Bauprozess haftet noch unverfestigt verbliebenes, pulverförmiges Aufbaumaterial an dem Objekt. Dieses unverfestigt verbliebene, pulverförmiges Aufbaumaterial soll von dem Objekt getrennt werden. Das Trennen des wenigstens einen Objekts von losem, nicht verfestigtem pulverförmigem Aufbaumaterial kann das komplette Auspacken des Objekts aus dem Kuchen losen Aufbaumaterials oder Pulvers beinhalten oder aber lediglich ein Abreinigen von Resten von losem Pulver oder Aufbaumaterial von dem wenigstens einen Objekt und optional auch von der Bauplattform und gegebenenfalls auch von Stützstrukturen, welche nach dem Auspacken noch an dem wenigstens einen Objekt vorhanden sind.

Durch eine Anregung des realen Objekts zu Schwingungen kann das unverfestigt verbliebene Aufbaumaterial insbesondere fluidisiert werden, wodurch es von dem Objekt besser abfließen kann. Der Schwingungserreger erzeugt daher Schwingungen mit der Erregerfrequenz fₑ und/oder mit der Erregeramplitude Ae, die dann auf das Objekt übertragen werden. Zum andern kann eine elektronische Steuerung den Schwingungserreger derart ansteuern, dass die Erregerfrequenz fₑ und/oder die Erregeramplitude Aₑ variiert werden kann.

Der Schwingungserreger kann dabei beispielsweise einen Rüttler oder Vibrator umfassen, welcher eine periodische Schwingung erzeugt. Alternativ oder zusätzlich kann der Schwingungserreger auch einen sog. Klopfer umfassen, welcher impulsartig eine Kraft erzeugt, welche dann das Objekt zu einer Schwingung anregt.

Die Erfindung schlägt ein Verfahren zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen Objekts vor, wobei das Verfahren einen Schritt einer Anregung des Objekts zu Schwingungen durch einen von einer elektronische Steuerung gesteuerten Schwingungserreger mit einer Erregerfrequenz fₑ und/oder mit einer Erregeramplitude Aₑ umfasst, um im Rahmen einer Reinigungsphase unverfestigt verbliebenes Aufbaumaterial von dem Objekt zu trennen.

Zumindest die Reinigungsphase kann in einer geschlossenen Reinigungskammer einer Reinigungsvorrichtung stattfinden, die insbesondere staubdicht ausgeführt sein kann, wobei eine Zu- und Abfuhr des Objekts in die Reinigungskammer und aus der Reinigungskammer insbesondere durch ein zu öffnendes und verschließbares Mittel wie ein Schott, ein Tor oder eine Klappe erfolgt. Dann kann kein von dem Objekt abgereinigtes Aufbaumaterial nach außen dringen.

Weiterhin können in der Reinigungsvorrichtung eine Spanneinrichtung und eine Schwenkeinrichtung integriert sein, welche von einer elektronischen Steuerung derart gesteuert sind, dass das mittels der Spanneinrichtung an der Schwenkeinrichtung gespannte Objekt um wenigstens eine Schwenkachse schwenkbar ist. Dies kann beispielsweise dadurch realisiert sein, dass das Objekt durch die Spanneinrichtung an einem Drehteller der Schwenkeinrichtung gespannt ist, welcher durch einen von der elektronischen Steuerung gesteuerten Antrieb um wenigstens eine Schwenkachse geschwenkt wird.

Die Erfindung hat erkannt, dass eine Anregung des Objekts vermieden werden sollte, welche zu übermäßigen Schwingungen führt, weil dann, vor allem, wenn es sich um große oder lange Objekte handelt und/oder das Objekt lediglich an einem Ende beispielsweise in einer Spanneinrichtung an einem Drehteller eingespannt ist, die Gefahr besteht, dass sich an besonders schwingungsbelasteten Stellen Risse in dem Objekt bilden oder sich die Einspannung löst. Weiterhin können übermäßige Schwingungen des Objekts auch zu übermäßigem Luftschall zu und damit zu übermäßigen Geräuschen führen, die dann im Umfeld der Vorrichtung, in welcher der Reinigungsprozess stattfindet, störend sind.

Das Verfahren gemäß einem ersten Aspekt ist dadurch gekennzeichnet, dass es eine Testphase umfasst, in welcher die Erregerfrequenz fₑ und/oder die Erregeramplitude Aₑ abhängig von einer erfassten oder bestimmten Schwingungsamplitude A wenigstens eines Abschnitts des (realen) Objekts und/oder eines computergenerierten Modells des (realen) Objekts bestimmt wird, wobei die Erregerfrequenz fₑ innerhalb eines Bereichs von Erregerfrequenzen (fe_{1;} fe₂) und/oder und/oder innerhalb eines Bereichs von Erregeramplitude (Aₑ₁; Aₑ₂) variiert und für jede Variation jeweils eine Schwingungsamplitude A des wenigstens einen Abschnitts des Objekts und/oder des computergenerierten Modells des Objekts erfasst wird, um eine Mehrzahl von erregerfrequenz- und/oder erregeramplitudenabhängigen Schwingungsamplituden A des wenigstens einen Abschnitts des Objekts und/oder des computergenerierten Modells des Objekts zu erhalten, und wobei wenigstens eine übermäßige Schwingungsamplitude A_{exzess} unter der Mehrzahl von erregerfrequenz- und/oder erregeramplitudenabhängigen Schwingungsamplituden Aᵢ bestimmt wird, deren Betrag größer als eine vorgegebene Grenz-Schwingungsamplitude A_{grenz} ist.

Im Rahmen der Reinigungsphase wird unverfestigt verbliebenes Aufbaumaterial von dem Objekt oder von einem weiteren, in Bezug auf das Objekt identischen Objekt getrennt und dabei eine Anregung des Objekts oder des weiteren Objekts insbesondere ausschließlich mit einer Erregerfrequenz fₑ und/oder mit einer Erregeramplitude Aₑ oder mit Erregerfrequenzen fe und/oder mit Erregeramplituden Aₑ durchgeführt, welche von der Erregerfrequenz fₑ und/oder von der Erregeramplitude Aₑ abweicht oder von den Erregerfrequenzen (fₑ) und/oder von der Erregeramplituden Aₑ abweichen, welche die wenigstens eine übermäßige Schwingungsamplitude A_{exzess} hervorgerufen hat (haben).

Dem ersten Aspekt der Erfindung liegt der Gedanke zugrunde, dass erregerfrequenz- und/oder erregeramplitudenabhängige übermäßige Schwingungsamplituden A des Objekts zu Beschädigungen oder zur Ausbildung von übermäßigem Luftschall führen können.

Mit anderen Worten wird daher in der Testphase das (reale) Objekt und/oder ein computergeneriertes Modell des (realen) Objekts mit einer Bandbreite (fe_{1;} fe₂) von Erregerfrequenzen fₑ und/oder mit einer Bandbreite (Aₑ₁; Aₑ₂) von Erregeramplituden Aₑ erregt und untersucht, für welche Erregerfrequenz(en) fₑ und/oder für welche Erregeramplitude(n) Aₑ die sich jeweils ergebende Schwingungsamplitude A größer als die Grenz-Schwingungsamplitude A_{grenz} ist. In der Reinigungsphase wird eine Anregung des Objekts oder des weiteren Objekts mit einer Erregerfrequenz fₑ und/oder mit einer Erregeramplitude Aₑ oder mit Erregerfrequenzen fₑ und/oder mit Erregeramplituden Aₑ vermieden, bei der oder bei denen sich herausgestellt hat, dass sie zu übermäßigen, die Grenz-Schwingungsamplitude A_{grenz} übersteigenden Schwingungsamplituden A an dem (realen) Objekt und/oder an dem computergenerierten Modell des (realen) Objekts geführt haben.

Die Erfahrungen, welche in Bezug auf das (erste) reale Objekt und/oder an dem computergenerierten Modell des (ersten) realen Objekts hinsichtlich der erregerfrequenzabhängigen Schwingungsamplituden Aᵢ gemacht worden sind, können dann auf das wenigstens eine weitere (reale) Objekt, welches ja mit dem (ersten) realen Objekt identisch ist, übertragen werden. Insofern wird bevorzugt lediglich ein einziges Mal der Testprozess an einem einzigen (ersten) realen Objekt und/oder an dem computergenerierten Modell des (ersten) realen Objekts durchgeführt und die Reinigungsphase dann an wenigstens einem weiteren realen Objekt, das mit dem (ersten) realen Objekt identisch ist und dann daher auch dieselben Schwingungseigenschaften oder modalen Parameter wie das (erste) reale Objekt aufweist, entsprechend den Ergebnissen der Testphase durchgeführt, um übermäßige Schwingungen bei der Reinigungsphase des wenigstens einen weiteren realen Objekts zu vermeiden.

Die Erfindung umfasst daher auch den Gedanken, dass die Testphase nicht an einem realen Objekt durchgeführt wird, sondern an einem computergenerierten Modell des realen Objekts im Rahmen einer Computersimulation, um herauszufinden, welche Erregerfrequenzen fe und/oder welche Erregeramplituden Aₑ zu übermäßigen Schwingungsamplituden A an einem realen Objekt führen würden.

Alternativ kann die Testphase auch sowohl an einem realen Objekt als auch an einem computergenerierten Modell des realen Objekts durchgeführt werden.

Auch kann für die Testphase wenigstens ein reales Objekt mit noch an ihm anhaftenden unverfestigt verbliebenem Aufbaumaterial herangezogen werden, oder wenigstens ein bereits vollständig oder teilweise gereinigtes reales Objekt, von welchem bereits das unverfestigt verbliebene Aufbaumaterial (wenigstens teilweise) entfernt worden ist. Im ersten Fall kann das Objekt mit noch an ihm haftenden unverfestigt verbliebenem Aufbaumaterial der Reinigungsphase unterzogen werden, welches auch bereits für die Testphase herangezogen worden ist, oder aber ein in Bezug auf das Objekt der Testphase weiteres, aber identisches Objekt mit noch an ihm anhaftenden unverfestigt verbliebenem Aufbaumaterial. Im zweiten Fall kann ein Objekt mit noch an ihm haftenden unverfestigt verbliebenem Aufbaumaterial der Reinigungsphase unterzogen werden, welches in Bezug auf das bereits gereinigte Objekt der Testphase ein identisches Objekt darstellt.

Bevorzugt ist die Reinigungsphase von der Testphase getrennt und schließt sich an diese zeitlich unmittelbar oder mit zeitlichem Abstand an. Alternativ können sich die Testphase und die Reinigungsphase aber auch zeitlich überschneiden, wenn beispielsweise dasselbe Objekt der Testphase und der Reinigungsphase unterzogen wird. Außerdem kann die Testphase innerhalb der oben erwähnten Reinigungskammer aber auch außerhalb der Reinigungskammer stattfinden, während die Reinigungsphase bevorzugt stets in der Reinigungskammer stattfindet. Die obigen Ausführungen gelten insbesondere für alle Aspekte der Erfindung.

Die Testphase wird bevorzugt ebenso wie die Reinigungsphase in der Reinigungskammer der Reinigungsvorrichtung durchgeführt. Die Testphase kann aber auch außerhalb der Reinigungskammer durchgeführt werden.

Das Verfahren gemäß einem zweiten Aspekt ist dadurch gekennzeichnet, dass es eine Testphase umfasst, in welchem die Erregerfrequenz (fₑ) und/oder die Erregeramplitude (Aₑ) abhängig von einer erfassten oder bestimmten Beschleunigung (a) wenigstens eines Abschnitts des Objekts und/oder eines computergenerierten Modells des Objekts bestimmt wird, wobei die Erregerfrequenz fₑ innerhalb eines Bereichs von Erregerfrequenzen (f_{e1;} fₑ₂) und/oder die Erregeramplitude Aₑ innerhalb eines Bereichs von Erregeramplituden (Aₑ₁; Aₑ₂) variiert und für jede Variation jeweils eine Beschleunigung (a) des wenigstens einen Abschnitts des Objekts und/oder des computergenerierten Modells des Objekts erfasst wird, um eine Mehrzahl von erregerfrequenz- und/oder erregeramplitudenabhängigen Beschleunigungen aᵢ zu erhalten, und wobei dann wenigstens eine übermäßige Beschleunigung a_{exzess} unter der Mehrzahl von erregerfrequenz- und/oder erregeramplitudenabhängigen Beschleunigungen aᵢ bestimmt wird, deren Betrag größer als eine vorgegebene Grenz-Beschleunigung ist.

Im Rahmen der Reinigungsphase wird unverfestigt verbliebenes Aufbaumaterial von dem Objekt oder von einem weiteren, in Bezug auf das Objekt identischen realen Objekt getrennt und dabei eine Anregung des Objekts oder des weiteren Objekts insbesondere ausschließlich mit einer Erregerfrequenz fₑ und/oder mit einer Erregeramplitude Aₑ oder mit Erregerfrequenzen fₑ und/oder mit Erregeramplituden Aₑ durchgeführt, welche von der Erregerfrequenz fₑ und/oder von der Erregeramplitude Aₑ abweicht oder von den Erregerfrequenzen fₑ und/oder von den Erregeramplitude Aₑ abweichen, welche die wenigstens eine übermäßige Beschleunigung a_{exzess} hervorgerufen hat (haben)

Dem zweiten Aspekt der Erfindung liegt der Gedanke zugrunde, dass übermäßige Beschleunigungen a des Objekts zu Beschädigungen des Objekts oder zur Ausbildung von übermäßigem Luftschall führen können.

Mit anderen Worten wird daher in der Testphase das (reale) Objekt und/oder ein computergeneriertes Modell des (realen) Objekts mit einer Bandbreite (f_{e1;} fₑ₂) von Erregerfrequenzen fₑ und/oder mit einer Bandbreite (Aₑ₁; Aₑ₂) von Erregeramplituden Aₑ erregt und untersucht, für welche Erregerfrequenz(en) fₑ und/oder für welche Erregeramplituden Aₑ die jeweils sich ergebende Beschleunigung a größer als die Grenz-Beschleunigung a_{grenz} ist. In der Reinigungsphase wird eine Anregung des Objekts oder des weiteren Objekts mit Erregerfrequenzen fₑ und/oder mit Erregeramplituden Aₑ vermieden, bei der oder bei denen sich herausgestellt hat, dass sie zu übermäßigen, die Grenz-Beschleunigung a_{grenz} übersteigenden Beschleunigungen a an dem (realen) Objekt und/oder an dem computergenerierten Modell des (realen) Objekts geführt haben.

Das Verfahren gemäß einem dritten Aspekt ist dadurch gekennzeichnet, dass es eine Testphase umfasst, in welchem die Erregerfrequenz fₑ und/oder die Erregeramplitude Aₑ abhängig von einem erfassten oder bestimmten Wert für eine akustische Größe L bestimmt wird, welche einen von dem Objekt oder von einem computergenerierten Modell des Objekts abgestrahlten Luftschall repräsentiert, wenn das Objekt oder das computergenerierte Modell des Objekts mit der Erregerfrequenz fe und/oder mit der Erregeramplitude Ae angeregt wird, wobei die Erregerfrequenz fₑ innerhalb eines Bereichs von Erregerfrequenzen (f_{e1;} fₑ₂) variiert und/oder die Erregeramplitude Aₑ innerhalb eines Bereichs von Erregeramplituden (Aₑ₁; Aₑ₂) variiert und für jede Variation jeweils ein Wert für die akustische Größe (L) erfasst wird, um eine Mehrzahl von erregerfrequenz- und/oder erregeramplitudenabhängigen Werten Lᵢ für die akustische Größe L zu erhalten, und wobei wenigstens ein übermäßiger Wert Lexzess für die akustische Größe L unter der Mehrzahl von erregerfrequenz- und/oder erregeramplitudenabhängigen Werten Lᵢ für die akustische Größe L bestimmt wird, welcher größer als ein vorgegebener Grenzwert L_{grenz} für die akustische Größe L ist_{.}

In der Reinigungsphase wird unverfestigt verbliebenes Aufbaumaterial von dem Objekt oder von einem weiteren, in Bezug auf das reale Objekt identischen Objekt getrennt und dabei eine Anregung des realen Objekts oder des weiteren Objekts insbesondere ausschließlich mit einer Erregerfrequenz fₑ und/oder mit einer Erregeramplituden Aₑ oder mit Erregerfrequenzen fₑ und/oder mit Erregeramplituden Aₑ durchgeführt, welche von der Erregerfrequenz fₑ und/oder von der Erregeramplitude Aₑ oder von den Erregerfrequenzen fₑ und/oder von den Erregeramplituden Aₑ abweicht (abweichen), welche den wenigstens einen übermäßigen Wert L_{exzess} für die akustische Größe L hervorgerufen hat (haben).

Dem dritten Aspekt der Erfindung liegt der Gedanke zugrunde, dass erregerfrequenz- und/oder erregeramplitudenabhängige übermäßige Werte L_{exzess} für die akustische Größe L zu übermäßigem Luftschall führen können.

Mit anderen Worten wird daher in der Testphase das (reale) Objekt und/oder ein computergeneriertes Modell des (realen) Objekts mit einer Bandbreite (f_{e1;} fe₂) von Erregerfrequenzen fₑ und/oder mit einer Bandbreite (Aₑ₁; Aₑ₂) von Erregeramplituden Aₑ erregt und untersucht, für welche Erregerfrequenz(en) fₑ und/oder für welche Erregeramplituden Aₑ der jeweils sich ergebende Wert für die akustische Größe L größer als der vorgegebene Grenzwert L_{grenz} für die akustische Größe L ist. In der Reinigungsphase wird eine Anregung des Objekts oder des weiteren Objekts mit Erregerfrequenzen fₑ und/oder mit Erregeramplituden Aₑ vermieden, bei der oder bei denen sich herausgestellt hat, dass sie zu übermäßigen, den vorgegebenen Grenzwert L_{grenz} für die akustische Größe L übersteigenden Werte für die akustische Größe L an dem (realen) Objekt und/oder an dem computergenerierten Modell des (realen) Objekts geführt haben.

Von den drei oben beschriebenen Aspekten des erfindungsgemäßen Verfahrens, dem ersten, zweiten und dritten Aspekt kann wenigstens ein Aspekt durchgeführt werden.

In den Unteransprüchen sind vorteilhafte Weiterbildung der in Anspruch 1 angegebenen Erfindung definiert.

Bevorzugt kann (können) die Schwingungsamplitude A des wenigstens einen Abschnitts des Objekts und/oder die Beschleunigung a des wenigstens einen Abschnitts des Objekts 3 und/oder der Wert für die akustische Größe L, welche den von dem Objekt abgestrahlten Luftschall repräsentiert, mittels einer in Bezug auf das Objekt berührungslosen Sensoreinrichtung erfasst oder bestimmt und als elektrisches Signal in die elektronische Steuerung zur Auswertung eingesteuert werden.

Auch kann die elektronische Steuerung den Schwingungserreger abhängig von dem elektrischen Signal derart steuern oder regeln, dass die Erregerfrequenz fₑ und/oder die Erregeramplitude Aₑ und/oder die akustische Größe L abhängig von dem elektrischen Signal angepasst oder verändert wird.

In Bezug auf das Objekt berührungslose Sensoreinrichtung meint, dass die Sensoreinrichtung nicht unmittelbar an dem Objekt befestigt oder angeordnet ist und daher diesbezüglich berührungslos arbeitet. Hingegen kann die Sensoreinrichtung an von dem Objekt abweichenden Komponenten der Reinigungsvorrichtung angeordnet sein, wie weiter unten noch ausgeführt wird. Vermieden wird auch eine Anbringung der berührungslos arbeitenden Sensoreinrichtung an der Spanneinrichtung und/oder an dem Drehteller. Der Vorteil der berührungslos arbeitenden Sensoreinrichtung liegt darin, dass dann keine Kabeldurchführungen durch die Welle des Drehtellers notwendig sind.

Bevorzugt umfasst die Sensoreinrichtung als nach einem berührungslosen Messprinzip arbeitenden Sensor wenigstens ein Mikrophon, welches den Luftschall erfasst, welche die Schwingungen des zur Schwingung angeregten Objekts erzeugen. Das Mikrophon wandelt diesen Luftschall in ein elektrisches Mikrofonsignal als elektrisches Schwingungssignal um. Unter einem Mikrophon soll daher wie im üblichen Sinne ein Schallwandler verstanden werden, der Luftschall als Schallwechseldruckschwingungen in entsprechende elektrische Spannungsänderungen als Mikrofonsignal umwandelt. Dieses unterscheidet Mikrophone von Tonabnehmern, die Festkörperschwingungen umsetzen. Beispielsweise umfasst das Mikrophon eine dünne, elastisch gelagerte Membran, die durch die Druckschwankungen des Luftschalls zu Bewegungen angeregt wird. Sie bildet durch ihre Bewegung die zeitliche Verteilung des Wechseldrucks nach. Ein integrierter Wandler, der mechanisch oder elektrisch mit der Membran gekoppelt ist, generiert daraus eine der Membranbewegung entsprechende Tonfrequenz-Wechselspannung oder eine entsprechende pulsierende Gleichspannung.

Das Mikrofon ist bevorzugt innerhalb einer (staubdichten) Reinigungskammer der Reinigungsvorrichtung angeordnet oder befestigt, in welcher wenigstens die Reinigungsphase des Objekts bzw. das Trennen von unverfestigt verbliebenem Aufbaumaterial von dem Objekt erfolgt. Da die staubreiche Atmosphäre in der Reinigungskammer das Mikrophon beschädigen kann, ist das Mikrophon bevorzugt in einem separaten Gehäuse angeordnet. Das Mikrophon kann bevorzugt ein Richtmikrophon sein.

Eine Kombination von mehreren Mikrophonen kann die Messgenauigkeit verbessern. Denn mehrere in verschiedenen Richtungen ausgerichtete Mikrofone können im Zusammenwirken mit einer entsprechenden Auswertesoftware in der elektronischen Steuerung Fremdgeräusche erkennen und diese ausblenden. Alternativ kann das Mikrophon auch außerhalb der Reinigungskammer angeordnet sein. Die in der elektronischen Steuerung implementierte Auswertesoftware kann aus den Mikrophonsignalen durch Filterung Störgeräusche ausblenden.

Auch kann das Mikrophon den Luftschall erfassen, welche die Schwingungen des zu Schwingungen angeregten realen Objekts direkt oder indirekt erzeugen, und diesen Luftschall in ein Mikrofonsignal als elektrisches Schwingungssignal zu wandeln.

Beispielsweise kann das Mikrophon (direkt) den Luftschall erfassen, welcher das zu Schwingungen angeregte reale Objekt direkt erzeugt (hat), indem der von den Schwingungen des realen Objekts erzeugte Luftschall (direkt) von dem Mikrophon erfasst wird. Alternativ oder zusätzlich kann das Mikrophon auch den Luftschall erfassen, welcher das zu Schwingungen angeregte Objekt indirekt erzeugt (hat). Denn die relativ großflächige Wandung der Reinigungskammer wird durch den von dem Objekt erzeugten Luftschall ihrerseits zu Körperschall angeregt, welcher dann von der Wandung wiederum als Luftschall abgestrahlt wird, der dann von dem Mikrophon zusätzlich zu dem direkt erfassten Luftschall erfasst werden kann.

Auch kann die Sensoreinrichtung wenigstens einen nach einem berührungslosen Messprinzip arbeitenden Schalldruckpegel-Sensor umfassen, welcher innerhalb oder außerhalb der Reinigungskammer angeordnet sein kann und welcher ein von dem Schalldruckpegel SPL des von dem Objekt abgestrahlten Luftschalls abhängiges elektrisches Signal erzeugt und in die elektronische Steuereinrichtung zur Auswertung einsteuert. Der Schalldruckpegel SPL des Luftschalls kann auch Informationen einerseits über die Intensität des Reinigungsprozesses und andererseits über Fehler und Störungen des Reinigungsprozesses liefern. Ein Beispiel dafür ist, dass der Schalldruckpegel SPL des Luftschalls umso höher ist, desto intensiver die Schwingungen des Objekts sind. Wenn dann ein Grenz-Schalldruckpegel SPL_{grenz} durch den mittels des Schalldruckpegel-Sensors erfassten Istwerts SPLᵢₛₜ des Schalldruckpegels SPL überschritten wird und dies von der elektronischen Steuerung festgestellt wird, kann dies einen Hinweis auf eine Störung des Reinigungsprozesses oder auf eine drohende Schädigung des Objekts darstellen, etwa, wenn das reale Objekt von zu erwarteten Schwingungsamplituden abweichende (zu große) Schwingungsamplituden aufweist, die dann einen entsprechend hohen Istwert SPLᵢₛₜ des Schalldruckpegels SPL erzeugen.

Alternativ oder zusätzlich kann die Sensoreinrichtung wenigstens einen nach einem berührungslosen optischen Messprinzip arbeitenden Sensor umfassen, wie beispielsweise einen Lasersensor. Lasersensoren eigenen sich aufgrund ihres berührungslosen Messprinzips und ihrer hohen Auflösung für die präzise Messungen von Abstand, Weg und Position sowie von Schwingungen fester Körper. Durch ein Analyseverfahren berechnet die elektronische Steuerung als Auswerteeinrichtung des Lasersensors insbesondere mittels Triangulation oder Phasenverschiebung den Istwert der Schwingungen des realen Objekts. Lasersensoren arbeiten überwiegend nach dem Laser-Triangulations-Prinzip.

Zusätzlich oder alternativ kann die Sensoreinrichtung wenigstens einen Schwingungssensor beispielsweise als Beschleunigungssensor umfassen, welcher mit der Wandung der Reinigungskammer (steif) verbunden ist, um wie oben beschrieben den Körperschall der Wandung der Reinigungskammer zu erfassen, welcher durch den von dem realen Objekt abgestrahlten Luftschall in der Wandung erzeugt wird.

Gemäß einer Fortbildung ist in der elektronischen Steuerung eine Auswertesoftware implementiert, welche ausgebildet ist, dass sie anhand des elektrischen Signals, Störungen im Reinigungsprozess und/oder eine Beschädigung des Objekts erkennt und bei einem solchen Erkennen ein Störungssignal erzeugt.

Insbesondere ist die Auswertesoftware ausgebildet, dass das Störungssignal von der elektronischen Steuerung erzeugt wird, wenn die Schwingungsamplitude A und/oder die Beschleunigung a und/oder der Wert für die akustische Größe L jeweils den zugeordneten Grenzwert A_{grenz}, a_{grenz} und/oder L_{grenz} überschritten hat (haben).

Beispielsweise können spontane Veränderungen wenigstens einer dieser Größen auf einen Fehler hinweisen, etwa dergestalt, dass das in der Regel an einer Spanneinrichtung eingespannte Objekt einen Riss oder eine Bruchstelle aufweist.

Langzeitige Veränderung wenigstens einer dieser Größen können auf einen Fehler hinweisen, der durch einen Verschleiß des Schwingungserregers und/oder der Schwenkeinrichtung verursacht sind.

Auch kann eine Wiedergabeeinrichtung vorgesehen werden, welche das Störungssignal optisch und/oder akustisch wiedergibt und/oder in einem Speicher abspeichert.

Gemäß einer Weiterbildung kann dann die elektronische Steuerung die Schwenkeinrichtung abhängig von dem elektrischen Signal derart steuern oder regeln, dass die Schwenkeinrichtung eine durch sie auf das reale Objekt übertragene Rotation abhängig von dem wenigstens einen elektrischen Signal anpasst.

Wenn beispielsweise das elektrische Signal eine Information enthält, die einen einen Grenzwert für die charakteristische Größe übersteigenden Wert repräsentiert, beispielsweise eine übermäßige Schwingungsamplitude A des Objekts, so kann die Schwenkeinrichtung durch die elektronische Steuerung dazu veranlasst werden, die Rotationsgeschwindigkeit und/oder einen Rotationsgrenzwinkel in einem Bereich zwischen 0 Grad und 360 Grad des realen Objekts anzupassen und insbesondere zu reduzieren, um die Gefahr zu reduzieren, dass durch die Rotation bedingte Fliehkräfte sich so zu den aus den Schwingungen des realen Objekts resultierenden Trägheitskräften addieren, dass das reale Objekt beschädigt und/oder aus der Spanneinrichtung entspannt wird.

Insbesondere werden die oben beschriebenen Verfahrensschritte durch die elektronische Steuerung koordiniert gesteuert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiel der Erfindung in der Zeichnung dargestellt und in der nachfolgenden Beschreibung näher erläutert. In der Zeichnung zeigt
- Fig. 1: eine perspektivische Ansicht eines Teils einer Reinigungsvorrichtung zum Trennen von realen, additiv hergestellten Objekten von unverfestigt verbliebenem Aufbaumaterial;
- Fig. 2: einen Ablaufplan einer bevorzugten Ausführungsform eines Verfahrens, welches mit der Reinigungsvorrichtung ausgeführt wird;
- Fig. 3: eine schematische Darstellung eines Teils der Reinigungsvorrichtung gemäß einer bevorzugten Ausführungsform.

### Beschreibung der Ausführungsbeispiele

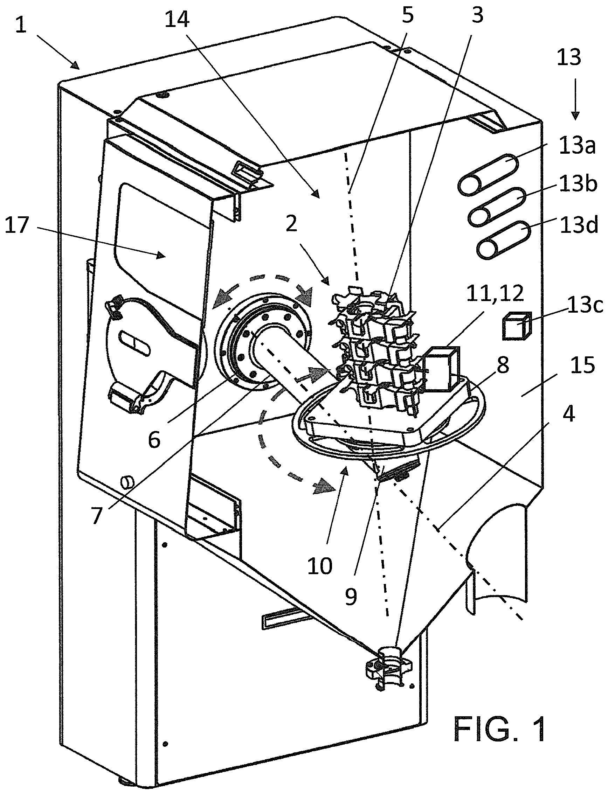

**Fig. 1** zeigt eine perspektivische Ansicht eines Teils einer Reinigungsvorrichtung 1 zum Trennen von realen, additiv hergestellten Objekten 3 von unverfestigt verbliebenem Aufbaumaterial von unverfestigt verbliebenem Aufbaumaterial im Rahmen einer Reinigungsphase.

Die Reinigungsvorrichtung 1 weist eine geschlossene, eine Wandung 15 aufweisende Reinigungskammer 14, in welcher hier beispielsweise lediglich ein reales Objekt 3 angeordnet ist, um es im Rahmen der Reinigungsphase von dem unverfestigt verbliebenen Aufbaumaterial zu trennen. Die Reinigungskammer verfügt beispielsweise über eine verschließbare Beladungsöffnung 17 zur Zu- und Abfuhr des realen Objekts 3. Die Beladungsöffnung 17 ist hier beispielsweise durch eine Klappe staubdicht verschließbar.

Die Reinigungsvorrichtung 1 umfasst eine in der Reinigungskammer 14 angeordnete Schwenkvorrichtung 2, durch welche das reale Objekt 3 um beispielsweise hier zwei Schwenkachsen 4, 5 verschwenkt oder rotiert werden kann. Dazu beinhaltet die Schwenkvorrichtung 2 einen ersten Schwenkaktuator 6, welcher hier beispielsweise einen hier mit seinem einen Ende von einer Lagerstelle frei auskragendenden Schwenkarm 7 um eine beispielsweise horizontale erste Schwenkachse 4 schwenkt. Weiterhin umfasst die Schwenkvorrichtung 2 hier beispielsweise auch einen Drehteller 8, der beispielsweise an dem andern Ende des Schwenkarms 7 angeordnet und von einem zweiten Schwenkaktuator 9 um eine zweite, beispielsweise senkrecht zur ersten Schwenkachse 4 angeordnete Schwenkachse 5 verschwenkt. Der Schwenkbereich soll sich in beiden Fällen von 0 Grad bis 360 Grad (Vollrotation) erstecken, wobei neben einer einmaligen Teil- oder Vollrotation auch mehrere Teil- oder Vollrotationen vorgesehen sind. Die beiden Schwenkaktuatoren 6, 9 werden durch eine hier nicht gezeigte elektronische Steuerung koordiniert gesteuert.

Beispielhaft ist hier ein additiv erzeugtes, reales Objekt 3 in einer Spanneinrichtung 10 der Schwenkvorrichtung 2 gespannt, wobei die Spanneinrichtung 10 hier beispielsweise auf dem Drehteller 8 angeordnet ist, so dass das Objekt 3 zusammen mit dem Drehteller 8 einerseits um die zweite Schwenkachse 5 und andererseits zusammen mit dem Schwenkarm 7 um die erste Schwenkachse 4 rotiert oder geschwenkt werden kann.

Durch die Rotation des realen Objekts 3 kann insbesondere unverfestigt verbliebenes Aufbaumaterial aus inneren Kanälen, Ausnehmungen und Vertiefungen sowie von der Oberfläche des realen Objekts 3 besser abfließen.

Auf dem Drehteller 8 ist ein Schwingungserreger, hier beispielsweise in Form eines Rüttlers 11 und eines Klopfers 12 angeordnet. Der Rüttler 11 erzeugt insbesondere periodische Schwingungen oder Kräfte und der Klopfer 12 impulsartige Kräfte, wobei die Schwingungen und Kräfte auf den Drehteller 8 und von dort auf das in der Spanneinrichtung 10 gespannte reale Objekt 3 übertragen werden. Der Schwingungserreger, insbesondere der Rüttler erzeugt periodische Schwingungen mit einer Erregerfrequenz fₑ und einer Erregeramplitude Aₑ, welche auf das reale Objekt übertragen werden. Die in dem realen Objekt 3 angeregten Schwingungen begünstigen dann ein Abfließen und Trennen von unverfestigt verbliebenem Aufbaumaterial.

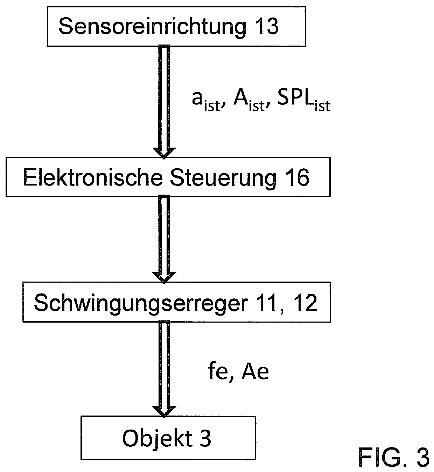

Gemäß **Fig. 1** und **Fig. 3** umfasst die Reinigungsvorrichtung 1 auch eine Sensoreinrichtung 13, welche wenigstens eine charakteristische Größe der durch den Schwingungserreger 11, 12 angeregten Schwingungen des realen Objekts 3 insbesondere während einer Testphase erfasst und als elektrisches Signal in die elektronische Steuerung 16 zur Auswertung einsteuert.

Die Sensoreinrichtung 13 weist hier beispielsweise einen derart in oder an der Wandung 15 der Reinigungskammer 14 angeordneten oder befestigten Schwingungssensor 13c aufweist, dass der Schwingungssensor 13c den Körperschall oder die Beschleunigung aist erfassen kann, zu welchem bzw. zu welcher die Wandung 15 der Reinigungskammer 14 durch den Luftschall angeregt wird, welchen das zu Schwingungen angeregte reale Objekt 3 innerhalb der Reinigungskammer 14 erzeugt. Der Schwingungssensor 13c ist hier beispielsweise als 3-Achs-Beschleunigungsensor ausgebildet, der Schwingungen in drei Raumachsen aufnehmen und als elektrisches Signal in die elektronische Steuerung 16 einsteuern kann.

Zusätzlich umfasst die Sensoreinrichtung 13 hier auch nach einem berührungslosen Messprinzip arbeitende Sensoren wie ein beispielsweise innerhalb der Reinigungskammer 14 angeordnetes Mikrophon 13a, welches den Luftschall, welchen Schwingungen des realen Objekts 3 direkt oder indirekt erzeugen, erfassen und in ein Mikrofonsignal als elektrisches Signal wandeln kann, das dann in die elektronische Steuerung 16 zur Auswertung eingesteuert wird.

Weiterhin umfasst die Sensoreinrichtung 13 einen beispielsweise innerhalb der Reinigungskammer 14 angeordneten Schalldruckpegel-Sensor 13d, welcher ein von dem Schalldruckpegel SPL des von dem zu Schwingungen angeregten realen Objekt 3 abgestrahlten Luftschalls abhängiges elektrisches Signal erzeugen kann, das dann ebenfalls in die elektronische Steuerung 16 zur Auswertung eingesteuert wird. Auch umfasst die Sensoreinrichtung 13 hier einen nach einem optischen und berührungslosen Messprinzip arbeitenden und in der Reinigungskammer 14 angeordneten Lasersensor 13b, welcher ein optisches Signal als elektrisches Signal erzeugen kann, das dann ebenfalls in die elektronische Steuerung 16 zur Auswertung eingesteuert wird.

Mit Hilfe dieser Sensoreinrichtung 13 werden dann während der Testphase als charakteristische Größen der Schwingungen des realen Objekts 3 ein Istwert Aᵢₛₜ einer Schwingungsamplitude A und eines Istwerts aᵢₛₜ einer Beschleunigung a wenigstens eines Abschnitts des realen Objekts 3 sowie eine akustische Größe L bestimmt oder geschätzt, welche einen von dem realen Objekt infolge seiner Schwingungsanregung abgestrahlten Luftschall repräsentiert. Gemäß der hier beschriebenen bevorzugten Ausführungsform werden alle drei oben genannten charakteristischen Größen erfasst, jedoch kann auch nur lediglich eine oder zwei der genannten charakteristischen Größen erfasst werden. Vor dem Hintergrund, dass in dem schwingungserregten Objekt 3 Schwingungsformen erzeugt werden, die an dem Objekt 3 lokal unterschiedliche Beschleunigungen a und Schwingungsamplituden A hervorrufen, kann das Erfassen des Istwerts Aᵢₛₜ der Schwingungsamplitude A und des Istwerts aᵢₛₜ der Beschleunigung a auf einen bestimmten Abschnitt des realen Objekts 3 beschränkt sein.

Beispielsweise wird hier der Istwert Aᵢₛₜ der Schwingungsamplitude A der Schwingungen des durch die Erregerfrequenz fₑ und die Erregeramplitude Aₑ zu Schwingungen angeregten realen Objekts 3 durch das Mikrophon 13a und/oder durch den Lasersensor 13b erfasst. Der Istwert aᵢₛₜ der Beschleunigung a der Wandung 15 der Reinigungskammer 14, welche von dem, von dem realen, schwingungserregten Objekt 3 abgestrahlten Luftschall wiederum zu Körperschallschwingungen angeregt wird, wird hier durch den Schwingungsaufnehmer 13c erfasst. Als akustische Größe L wird hier beispielsweise der Istwert SPLᵢₛₜ des Schalldruckpegels SPL des Luftschalls durch den Schalldruckpegel-Sensor 13d erfasst, den das reale, schwingungserregte Objekt 3 infolge seiner Köperschall-Schwingungen abstrahlt.

Die Testphase wird bevorzugt ebenso wie die Reinigungsphase in der Reinigungskammer 14 der Reinigungsvorrichtung 1 durchgeführt.

In der elektronischen Steuerung 16 sind Routinen implementiert, welche die durch den Schwingungserreger 11, 12 erzeugte Erregerfrequenz fₑ und die Erregeramplitude Aₑ abhängig von dem elektrischen Signal, d.h. hier beispielsweise abhängig von dem erfassten Istwert Aᵢₛₜ der Schwingungsamplitude A der Schwingungen des realen Objekts 3 und von dem erfassten Istwert aᵢₛₜ der Beschleunigung a der Wandung 15 der Reinigungskammer 14 und abhängig von dem Istwert SPLᵢₛₜ des Schalldruckpegels SPL des Luftschalls anpassen bzw. variieren, wie in **Fig. 3** schematisch gezeigt ist. Insbesondere kann der jeweilige Istwert an einen entsprechenden, beispielsweise von der elektronischen Steuerung 16 vorgegebenen Sollwert im Sinne einer Closed-Loop-Regelung angeglichen werden. Auch kann lediglich die Erregerfrequenz fₑ oder lediglich die Erregeramplitude Aₑ in Abhängigkeit von den genannten Größen angepasst bzw. variiert werden.

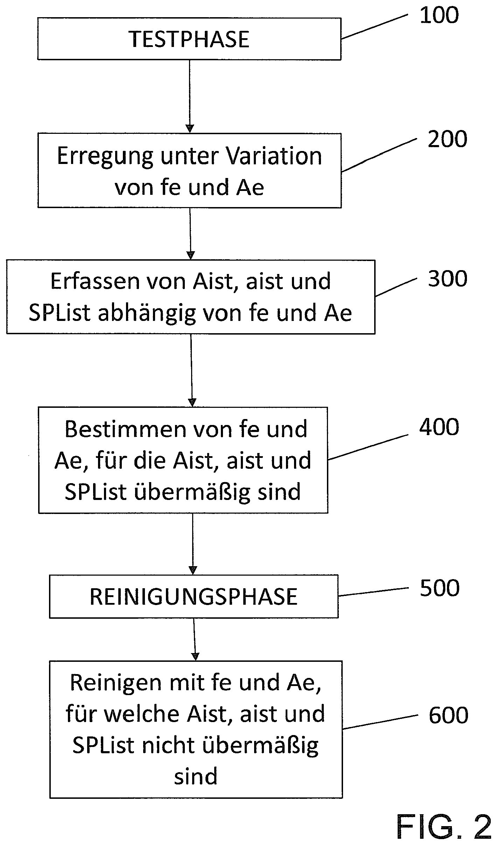

Durch die in der elektronischen Steuerung 16 implementierten Routinen ist insbesondere ein Verfahren realisiert, das in **Fig. 2** in einer bevorzugten Ausführungsform als Ablaufplan gezeigt ist.

Das Verfahren geht aus von der in **Fig. 1** gezeigten Situation, in welcher ein reales Objekt 3, beispielsweise mit noch an ihm anhaftendem unverfestigt verbliebenem Aufbaumaterial auf dem Drehteller 8 der Vorrichtung 1 gespannt ist. An dem realen Objekt 3 soll daher noch unverfestigt verbliebenes Aufbaumaterial anhaften, welches durch das Verfahren zumindest teilweise von dem realen Objekt 3 entfernt oder getrennt werden soll. Wenn von dem realen Objekt 3 die Rede ist, so ist damit je nach Fortschritt des Verfahrens, das reale Objekt 3 in einem Zustand gemeint, in welchem noch eine bestimmte Menge von unverfestigt verbliebenem Aufbaumaterial an ihm anhaftet oder, gegen Ende des Verfahrens, das Aufbaumaterial vollständig von dem realen Objekt 3 entfernt worden ist.

In einem Schritt 100 wird dann zu einem Zeitpunkt t₁ die Testphase gestartet, wobei in einem Schritt 200 der Testphase das reale Objekt zu Schwingungen angeregt wird, wobei durch den Schwingungserreger 11, 12, gesteuert durch die elektronische Steuerung 17 die Erregerfrequenz fe innerhalb eines Bereichs von Erregerfrequenzen fₑ₁; fₑ₂ und die Erregeramplitude Ae innerhalb eines Bereichs von Erregeramplituden Aₑ₁; Aₑ₂ variiert und in einem Schritt 300 durch die Sensoreinrichtung 13 für jede Variation von Erregerfrequenz fₑ und Erregeramplitude Aₑ jeweils ein Istwert Aᵢₛₜ für die Schwingungsamplitude A, ein Istwert aᵢₛₜ für die Beschleunigung a beispielsweise eines Abschnitts des Objekts 3 sowie Istwert SPLᵢₛₜ des Schalldruckpegels SPL des Luftschalls auf die oben beschriebene Weise erfasst wird, um eine Mehrzahl von erregerfrequenz- und/oder erregeramplitudenabhängigen Schwingungsamplituden Aᵢ und Beschleunigungen aᵢ des Abschnitts des Objekts 3 sowie Schalldruckpegel SPLᵢ zu erfassen bzw. zu erhalten und jeweils als elektrisches Signal in die elektronische Steuerung 17 einzusteuern.

Die in elektronischen Steuerung 17 implementierten Routinen bestimmen dann in einem Schritt 400 bezogen auf die jeweilige Erregerfrequenz fₑ und die jeweilige Erregeramplitude A jeweils übermäßige Schwingungsamplituden A_{exzess} unter der Mehrzahl der erfassten erregerfrequenz- und erregeramplitudenabhängigen Schwingungsamplituden Aᵢ, deren Betrag größer als eine vorgegebene Grenz-Schwingungsamplitude A_{grenz} ist, übermäßige Beschleunigungen a_{exzess} unter der Mehrzahl von erregerfrequenz- und erregeramplitudenabhängigen Beschleunigungen aᵢ, deren Betrag größer als eine vorgegebene Grenz-Beschleunigung a_{grenz} ist, sowie übermäßige Werte L_{exzess} für die akustische Größe L unter der Mehrzahl der erfassten erregerfrequenz- und erregeramplitudenabhängigen Werte Lᵢ für die akustische Größe L, welche größer als ein vorgegebener Grenzwert L_{grenz} für die akustische Größe sind.

Es ist klar, dass bereits während der Testphase durch die Schwingungsanregung des Objekts eine gewisse Menge an unverfestigt verbliebenem Aufbaumaterial von dem Objekt 3 getrennt wird. Jedoch soll diese Testphase in Bezug zur Reinigungsphase zeitlich eher kürzer ausfallen, um eine im Hinblick auf Schwingungen ungünstige Anregung des Objekts 3 zu vermeiden, wie sie oben beschrieben worden ist.

Für die Testphase wird hier beispielsweise ein Objekt 3 mit noch (vollständig) ihm anhaftenden unverfestigt verbliebenem Aufbaumaterial herangezogen. Alternativ kann für die Testphase aber auch ein teilweise gereinigtes oder bereits vollständig gereinigtes Objekt verwendet werden, von welchem bereits das unverfestigt verbliebene Aufbaumaterial (wenigstens teilweise) entfernt worden ist, mit dem Zweck, für diese Art von Objekt 3 im Hinblick auf die oben beschriebenen Auswirkungen ungünstige Erregerfrequenzen fe und Erregeramplituden Aₑ zu ermitteln.

In einem vorzugsweise nachfolgenden Schritt 500 wird dann die eigentliche Reinigungsphase in der Reinigungskammer 14 durchgeführt, in welcher dann (der verbliebene Rest) an unverfestigt verbliebenem Aufbaumaterial von dem Objekt 3 getrennt wird.

Während der Reinigungsphase wird dann in einem Schritt 600 eine Anregung des Objekts 3 insbesondere ausschließlich mit einer Erregerfrequenz fₑ oder mit Erregerfrequenzen fₑ und mit einer Erregeramplitude Aₑ oder mit Erregeramplituden Aₑ durchgeführt, welche von der Erregerfrequenz fₑ und von der Erregeramplitude Aₑ abweicht oder von den Erregerfrequenzen fₑ und von den Erregeramplituden Aₑ abweichen, welche die wenigstens eine übermäßige Schwingungsamplitude A_{exzess} hervorgerufen hat (haben).

Weiterhin wird in der Reinigungsphase in dem Schritt 600 eine Anregung des Objekts 3 insbesondere ausschließlich mit einer Erregerfrequenz fₑ und mit einer Erregeramplitude Aₑ oder mit Erregerfrequenzen fₑ und mit Erregeramplituden Aₑ durchgeführt, welche von der Erregerfrequenz fₑ und von der Erregeramplitude Aₑ abweicht oder von den Erregerfrequenzen fₑ und von Erregeramplituden Aₑ abweichen, welche die wenigstens eine übermäßige Beschleunigung a_{exzess} hervorgerufen hat (haben).

Weiterhin wird in der Reinigungsphase in dem Schritt 600 eine Anregung des Objekts 3 insbesondere ausschließlich mit einer Erregerfrequenz fₑ und mit einer Erregeramplitude Aₑ oder mit Erregerfrequenzen fₑ und mit Erregeramplituden Aₑ durchgeführt, welche von der Erregerfrequenz fₑ und von der Erregeramplitude Aₑ oder von den Erregerfrequenzen fₑ und von den Erregeramplituden Aₑ abweicht (abweichen), welche den wenigstens einen übermäßigen Wert L_{exzess} für die akustische Größe L hervorgerufen hat (haben).

Dieses Verfahren bringt den Vorteil mit sich, dass dann übermäßige Schwingungen des Objekts 3 vermieden werden, welche das Objekt 3 schädigen könnten. Weiterhin wird auch ein übermäßiger Luftschall, welcher von den Schwingungen des Objekts 3 herrührt, vermieden.

### Bezugszahlenliste

- 1: Reinigungsvorrichtung
- 2: Schwenkvorrichtung
- 3: reales Objekt
- 4: erste Schwenkachse
- 5: zweite Schwenkachse
- 6: erster Schwenkaktuator
- 7: Schwenkarm
- 8: Drehteller
- 9: zweiter Schwenkaktuator
- 10: Spanneinrichtung
- 11: Rüttler
- 12: Klopfer
- 13: Sensoreinrichtung
- 13a: Mikrophon
- 13b: Lasersensor
- 13c: Schwingungssensor
- 13d: Schalldruckpegel-Sensor
- 14: Reinigungskammer
- 15: Wandung
- 16: elektronische Steuerung
- 17: Beladungsöffnung
- Aₑ: Erregeramplitude
- fₑ: Erregerfrequenz
- A: Schwingungsamplitude
- a: Beschleunigung
- L: akustische Größe
- A_{grenz}: Grenzwert für die Schwingungsamplitude A
- a_{grenz}: Grenzwert für die Beschleunigung a
- L_{grenz}: Grenzwert für die akustische Größe L
- A_{exzess}: übermäßiger Wert für die Schwingungsamplitude
- a_{exzess}: übermäßiger Wert für die Beschleunigung
- L_{exzess}: übermäßiger Wert für die akustische Größe

## Patentansprüche

1. Verfahren zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts (3), wobei das Verfahren einen Schritt (500) einer Anregung des Objekts (3) zu Schwingungen durch einen von einer elektronische Steuerung (16) gesteuerten Schwingungserreger (11, 12) mit einer Erregerfrequenz (fₑ) und/oder mit einer Erregeramplitude (Aₑ) umfasst, um im Rahmen einer Reinigungsphase unverfestigt verbliebenes Aufbaumaterial von dem Objekt (3) zu trennen, **dadurch gekennzeichnet, dass**
a) es eine Testphase umfasst, in welchem die Erregerfrequenz (fₑ) und/oder die Erregeramplitude (Aₑ) abhängig von einer erfassten oder bestimmten Schwingungsamplitude (A) wenigstens eines Abschnitts des Objekts (3) und/oder eines computergenerierten Modells des Objekts (3) bestimmt wird, wobei die Erregerfrequenz (fₑ) innerhalb eines Bereichs von Erregerfrequenzen (f_{e1;} fₑ₂) und/oder die Erregeramplitude (Aₑ) innerhalb eines Bereichs von Erregeramplituden (Aₑ₁; Aₑ₂) variiert und für jede Variation jeweils eine Schwingungsamplitude (A) des wenigstens einen Abschnitts des Objekts (3) erfasst wird, um eine Mehrzahl von erregerfrequenz- und/oder erregeramplitudenabhängigen Schwingungsamplituden (Aᵢ) des wenigstens einen Abschnitts des Objekts (3) zu erhalten, und wobei wenigstens eine übermäßige Schwingungsamplitude (A_{exzess}) unter der Mehrzahl von erregerfrequenz- und/oder erregeramplitudenabhängigen Schwingungsamplituden (Aᵢ) bestimmt wird, deren Betrag größer als eine vorgegebene Grenz-Schwingungsamplitude (A_{grenz}) ist, und wobei im Rahmen der Reinigungsphase unverfestigt verbliebenes Aufbaumaterial von dem Objekt (3) oder von einem weiteren, in Bezug auf das Objekt (3) identischen Objekt getrennt wird, eine Anregung des Objekts (3) oder des weiteren Objekts insbesondere ausschließlich mit einer Erregerfrequenz (fₑ) oder mit Erregerfrequenzen (fₑ) und/oder mit einer Erregeramplitude (Aₑ) oder mit Erregeramplituden (Aₑ) durchgeführt wird, welche von der Erregerfrequenz (fₑ) und/oder von Erregeramplitude (Aₑ) abweicht oder von den Erregerfrequenzen (fₑ) und/oder von den Erregeramplituden (Aₑ) abweichen, welche die wenigstens eine übermäßige Schwingungsamplitude (A_{exzess}) hervorgerufen hat (haben), und/oder
b) eine Testphase umfasst, in welchem die Erregerfrequenz (fₑ) und/oder die Erregeramplitude (Aₑ) abhängig von einer erfassten oder bestimmten Beschleunigung (a) wenigstens eines Abschnitts des Objekts (3) und/oder eines computergenerierten Modells des Objekts (3) bestimmt wird, wobei die Erregerfrequenz (fₑ) innerhalb eines Bereichs von Erregerfrequenzen (fe_{1;} fe₂) und/oder die Erregeramplitude (Aₑ) innerhalb eines Bereichs von Erregeramplituden (Aₑ₁; Aₑ₂) variiert und für jede Variation jeweils eine Beschleunigung (a) des wenigstens einen Abschnitts des Objekts (3) und/oder des computergenerierten Modells des Objekts (3) erfasst wird, um eine Mehrzahl von erregerfrequenz- und/oder erregeramplitudenabhängigen Beschleunigungen (aᵢ) zu erhalten, und wobei dann wenigstens eine übermäßige Beschleunigung (a_{exzess}) unter der Mehrzahl von erregerfrequenz-und/oder erregeramplitudenabhängigen Beschleunigungen (aᵢ) bestimmt wird, deren Betrag größer als eine vorgegebene Grenz-Beschleunigung ist, und wobei im Rahmen der Reinigungsphase unverfestigt verbliebenes Aufbaumaterial von dem Objekt (3) oder von einem weiteren, in Bezug auf das Objekt identischen realen Objekt getrennt wird, eine Anregung des Objekts (3) oder des weiteren Objekts insbesondere ausschließlich mit einer Erregerfrequenz (fₑ) und/oder mit einer Erregeramplitude (Aₑ) oder mit Erregerfrequenzen (fₑ) und/oder mit Erregeramplituden (Aₑ) durchgeführt wird, welche von der Erregerfrequenz (fₑ) und/oder von der Erregeramplitude (Aₑ) abweicht oder von den Erregerfrequenzen (fₑ) und/oder von den Erregeramplituden (Aₑ) abweichen, welche die wenigstens eine übermäßige Beschleunigung (a_{exzess}) hervorgerufen hat (haben), und/oder
c) es eine Testphase umfasst, in welchem die Erregerfrequenz (fₑ) und/oder die Erregeramplitude (Aₑ) abhängig von einem erfassten oder bestimmten Wert für eine akustische Größe (L) bestimmt wird, welche einen von dem Objekt (3) oder von einem computergenerierten Modell des Objekts (3) abgestrahlten Luftschall repräsentiert, wenn das Objekt (3) oder das computergenerierte Modell des Objekts (3) mit der Erregerfrequenz (fₑ) und/oder mit der Erregeramplitude (Aₑ) angeregt wird, wobei die Erregerfrequenz (fₑ) innerhalb eines Bereichs von Erregerfrequenzen (f_{e1;} fe₂) variiert und/oder die Erregeramplitude (Aₑ) innerhalb eines Bereichs von Erregeramplituden (Aₑ₁; Aₑ₂) variiert und für jede Variation jeweils ein Wert für die akustische Größe (L) erfasst wird, um eine Mehrzahl von erregerfrequenz- und/oder erregeramplitudenabhängigen Werten (Lᵢ) für die akustische Größe (L) zu erhalten, und wobei wenigstens ein übermäßiger Wert (L_{exzess}) für die akustische Größe (L) unter der Mehrzahl von erregerfrequenz- und/oder erregeramplitudenabhängigen Werten (Lᵢ) für die akustische Größe (L) bestimmt wird, welcher größer als ein vorgegebener Grenzwert (L_{grenz}) für die akustische Größe ist, und wobei in der Reinigungsphase unverfestigt verbliebenes Aufbaumaterial von dem Objekt (3) oder von einem weiteren, in Bezug auf das Objekt identischen Objekt getrennt wird, eine Anregung des Objekts (3) oder des weiteren Objekts insbesondere ausschließlich mit einer Erregerfrequenz (fₑ) und/oder mit einer Erregeramplitude (Aₑ) oder mit Erregerfrequenzen (fₑ) und/oder mit Erregeramplituden (Aₑ) durchgeführt wird, welche von der Erregerfrequenz (fₑ) und/oder von der Erregeramplitude (Aₑ) oder von den Erregerfrequenzen (fₑ) und/oder von den Erregeramplituden (Aₑ) abweicht (abweichen), welche den wenigstens einen übermäßigen Wert (L_{exzess}) für die akustische Größe (L) hervorgerufen hat (haben).

2. Verfahren nach Anspruch 1, **dadurch gekennzeichnet, dass** die Schwingungsamplitude (A) des wenigstens einen Abschnitts des Objekts (3) und/oder die Beschleunigung (a) des wenigstens einen Abschnitts des Objekts (3) und/oder der Wert für die akustische Größe (L), welche den von dem Objekt (3) abgestrahlten Luftschall repräsentiert, mittels einer in Bezug auf das Objekt (3) berührungslosen Sensoreinrichtung (13) erfasst oder bestimmt und als elektrisches Signal in die elektronische Steuerung (16) zur Auswertung eingesteuert wird.

3. Verfahren nach Anspruch 2, **dadurch gekennzeichnet, dass** in der elektronischen Steuerung (16) eine Auswertesoftware implementiert ist, welche ausgebildet ist, dass sie den Schwingungserreger (11, 12) abhängig von dem elektrischen Signal steuert oder regelt.

4. Verfahren nach Anspruch 3, **dadurch gekennzeichnet, dass** die Auswertesoftware ausgebildet ist, dass sie anhand des elektrischen Signals Störungen in der Reinigungsphase erkennt und bei einem solchen Erkennen ein Störungssignal erzeugt.

5. Verfahren nach Anspruch 4, **dadurch gekennzeichnet, dass** das Störungssignal optisch und/oder akustisch in einer Wiedergabeeinrichtung wiedergegeben und/oder in einem Speicher abspeichert wird.

6. Verfahren nach einem der vorhergehenden Ansprüche, **dadurch gekennzeichnet, dass** die Reinigungsphase innerhalb einer geschlossenen, eine Wandung (15) aufweisenden Reinigungskammer (14) durchgeführt wird, in welcher das Objekt (3) angeordnet ist.

7. Verfahren nach Anspruch 6, **dadurch gekennzeichnet, dass** die Schwingungsamplitude (A) und/oder die Beschleunigung (a) und/oder die akustische Größe (L), die durch das zu Schwingungen angeregte Objekt (3) erzeugt wird (werden) durch wenigstens einen Schwingungssensor (13c) der Sensoreinrichtung (13) indirekt erfasst wird (werden), welcher mit der Wandung (15) der Reinigungskammer (14) verbunden ist, welche durch den Luftschall, den das zu Schwingungen angeregte reale Objekt (3) innerhalb der Reinigungskammer (14) erzeugt, zu Körperschallschwingungen angeregt wird.

8. Verfahren nach einem der vorhergehenden Ansprüche, **dadurch gekennzeichnet, dass** als akustische Größe (L) der Schalldruckpegel (SPL) des Luftschalls erfasst wird.

9. Verfahren nach Anspruch 8, **dadurch gekennzeichnet, dass** der Schalldruckpegel (SPL) durch wenigstens einen nach einem berührungslosen Messprinzip arbeitenden Schalldruckpegel-Sensor (13d) erfasst wird, welcher ein von dem Schalldruckpegel (SPL) des von dem realen Objekt (3) abgestrahlten Luftschalls abhängiges elektrisches Signal erzeugt und in die elektronische Steuerung (16) zur Auswertung einsteuert.

10. Verfahren nach den Ansprüchen 6 und 9, **dadurch gekennzeichnet, dass** der wenigstens eine Schalldruckpegel-Sensor (13d) innerhalb der Reinigungskammer (14) oder außerhalb der Reinigungskammer (14) angeordnet wird.

11. Verfahren nach einem der vorhergehenden Ansprüche, **dadurch gekennzeichnet, dass** als akustische Größe (L) die Schwingungsamplitude und/oder die Frequenz des von dem Objekt (3) abgestrahlten Luftschalls erfasst wird (werden).

12. Verfahren nach einem der vorhergehenden Ansprüche, **dadurch gekennzeichnet, dass** die akustische Größe (L) durch wenigstens ein Mikrophon (13a) erfasst wird, welches ein von der akustischen Größe (L) abhängiges elektrisches Signal erzeugt und in die elektronische Steuerung (16) zur Auswertung einsteuert.

13. Verfahren nach den Ansprüchen 6 und 11, **dadurch gekennzeichnet, dass** das wenigstens eine Mikrophon (13a) innerhalb der Reinigungskammer (14) oder außerhalb der Reinigungskammer (14) angeordnet wird.

14. Verfahren nach einem der vorhergehenden Ansprüche, **dadurch gekennzeichnet, dass** die Schwingungsamplitude (A) und/oder die Beschleunigung (a) des wenigstens einen Abschnitts des Objekts (3) durch einen Lasersensor erfasst wird (werden).
